# FASCICULE DE BREVET EUROPEEN

(11) **EP 0 750 388 B1**
(45) Date de publication et mention de la délivrance du brevet: **30.08.2000**
(21) Numéro de dépôt: 96401361.9
(22) Date de dépôt: 20.06.1996
(51) Int. Cl.: H02K 11/02, H02K 5/14

(54) **Alternateur de véhicule automobile comportant une plaque porte-balais avec un condensateur d'antiparasitage surmoulé**
Wechselstromgenerator für ein Kraftfahrzeug mit einer Bürstentragplatte mit umgossenem Entstörkondensator
Motor vehicle alternator including a brush holder plate with overmoulded interference suppressing capacitor

(30) Priorité: 21.06.1995 FR 9507543
(43) Date de publication de la demande: 27.12.1996
(73) Titulaire: VALEO EQUIPEMENTS ELECTRIQUES MOTEUR, 94000 Créteil (FR)
(72) Inventeur: Lorand, Patrick, 94360 Sucy-en-Brie (FR); Abadia, Roger, 93360 Neuilly/Plaisance (FR); Gautier, Jean, 49124 Saint Barthelemy d'Anjou (FR)
(74) Mandataire: Kohn, Philippe

(56) Documents cités:
- EP-A- 0 440 395
- WO-A-91/20119
- DE-A- 1 613 982
- DE-C- 4 233 679
- FR-A- 2 514 962
- US-A- 4 504 752

## Description

La présente invention concerne un alternateur de véhicule automobile.

L'invention concerne plus particulièrement un alternateur de véhicule automobile du type dans lequel un dispositif de régulation de la tension du courant produit par l'alternateur est agencé sur une partie fixe de l'alternateur et comporte au moins une plaque porte-balais qui est réalisée par moulage en matière plastique isolante et qui porte un condensateur d'antiparasitage, et du type dans lequel le condensateur comporte un boîtier de protection et est raccordé à un circuit électrique partiellement noyé par surmoulage dans la plaque porte-balais.

Pour la fixation et le raccordement du régulateur et du condensateur, il est prévu que le circuit électrique noyé dans la plaque porte-balais comporte des pattes de raccordement sur lesquelles sont branchées des bornes de chacun de ces deux composants électroniques.

Les composants sont par ailleurs maintenus mécaniquement par vissage, par emboîtement élastique ou encore par collage dans des cavités sur la plaque porte-balais.

Afin d'assurer leur protection vis-à-vis d'agents extérieurs, les composants électroniques sont classiquement encapsulés dans un boîtier de protection réalisé en métal ou en matière plastique, des bornes de raccordement de ces composants s'étendant à l'extérieur de leur boîtier respectif de protection.

Une fois le condensateur d'antiparasitage monté sur la plaque porte-balais, et une fois les raccordements aux circuits électriques réalisés, les raccordements électriques sont généralement recouverts d'un mastic isolant qui est destiné à empêcher les faux contacts, les courts-circuits, ainsi que l'oxydation de ces raccordements.

Cette conception connue de l'intégration d'un condensateur d'antiparasitage sur la plaque porte-balais a ainsi pour inconvénient d'être relativement complexe à réaliser.

Le document WO-A-91/20119 décrit et représente un alternateur pour véhicule automobile comportant un régulateur de tension, un condensateur, un circuit électrique et une plage réalisée par moulage en matière plastique isolante, incluant le régulateur et le circuit électrique, le boîtier de protection du condensateur étant réalisé venu de matière avec ladite plaque par surmoulage autour du condensateur.

L'invention vise à proposer un perfectionnement d'un tel type d'alternateur dans lequel la plaque est une plaque porte-balais avec plaque support intégrée pour le dispositif de régulation, par exemple selon le document US-A-4.504.752, qui permette la fabrication en grande série tout en facilitant la gestion de l'ensemble comportant des composants surmoulés qui doit être identifié par la valeur de la capacité du condensateur en fonction du type d'alternateur et du véhicule

Dans ce but, l'invention propose un alternateur de véhicule automobile du type dans lequel un dispositif de régulation de la tension du courant produit par l'alternateur est agencé sur une partie fixe de l'alternateur et comporte au moins une plaque qui est réalisée par moulage en matière plastique isolante et qui porte un condensateur d'antiparasitage, du type dans lequel le condensateur comporte un boîtier de protection et est raccordé à un circuit électrique partiellement noyé par surmoulage dans ladite plaque, et du type dans lequel le boîtier de protection du condensateur est réalisé venu de matière avec la plaque, par surmoulage autour du condensateur, caractérisé en ce que la dite plaque est une plaque porte-balais, en ce que le boîtier de protection du condensateur est constitué d'une couche d'épaisseur sensiblement constante de la matière plastique isolante qui recouvre la surface externe du condensateur, et en ce que cette couche comporte au moins un évidement qui laisse apparaître à l'extérieur du boîtier une partie de la surface externe du condensateur pour qu'il soit possible de déterminer la valeur de la capacité du condensateur dont la surface externe est représentative de cette capacité.

Selon d'autres caractéristiques de l'invention :
- l'évidement est réalisé venu de matière par moulage ;
- l'évidement est la trace d'un doigt de maintien du condensateur en position dans le moule pour la réalisation de l'opération de surmoulage ;
- l'évidement est une rainure qui s'étend selon une direction transversale sensiblement perpendiculaire au plan général de la plaque porte-balais ;
- le condensateur est raccordé aux circuits électriques avant le moulage de la plaque porte-balais, et les zones de raccordements sont noyées dans la masse de la plaque porte-balais afin d'en assurer la protection et l'isolation électrique ;
- le condensateur est de forme générale parallélépipédique rectangle et il s'étend transversalement par rapport au plan général de la plaque porte-balais ;
- le condensateur s'étend transversalement au-delà de l'une des faces de la plaque porte-balais ;
- le circuit électrique est réalisé par découpage et pliage d'un flan de tôle et il comporte des pattes de raccordement au condensateur ;
- la plaque porte-balais comporte au moins une borne de raccordement à un circuit d'alimentation d'une batterie du véhicule et une borne de raccordement à la masse électrique du véhicule.

Les caractéristiques et avantages de l'invention apparaîtront à la lecture de la description détaillée qui suit pour la compréhension de laquelle on se reportera aux dessins annexés dans lesquels :

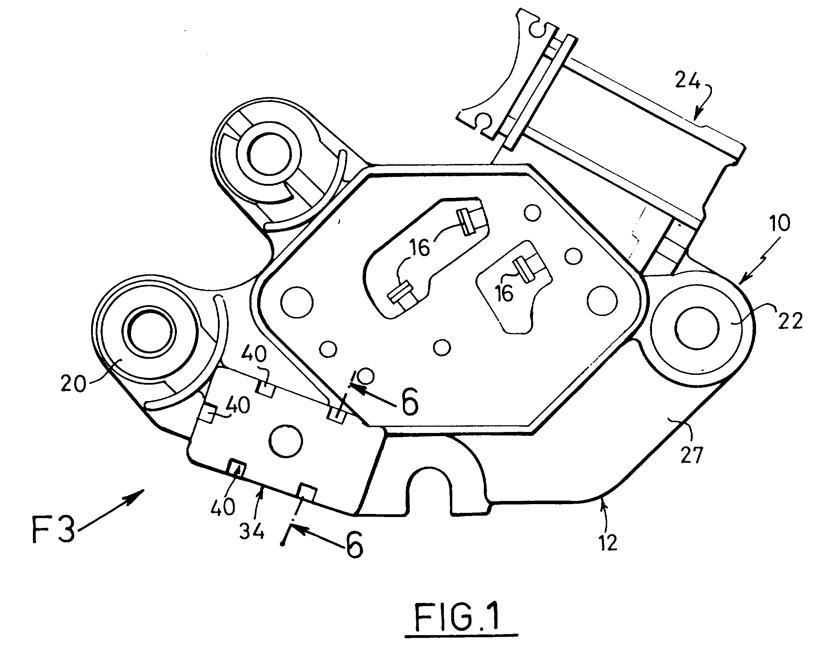

- la figure 1 est une vue de dessus d'une plaque porte-balais munie d'un condensateur surmoulé réalisé conformément aux enseignements de l'invention ;
- la figure 2 est une vue de dessous de la plaque porte-balais illustrée à la figure 1 ;
- la figure 3 est une vue de détail en perspective selon la flèche F3 de la figure 1 qui illustre le boîtier surmoulé du condensateur d'antiparasitage ;
- les figures 4 et 5 sont des vues de détail en section selon les lignes 4-4 et 5-5 de la figure 2 ; et
- la figure 6 est une vue de détail en section selon la ligne 6-6 de la figure 1.

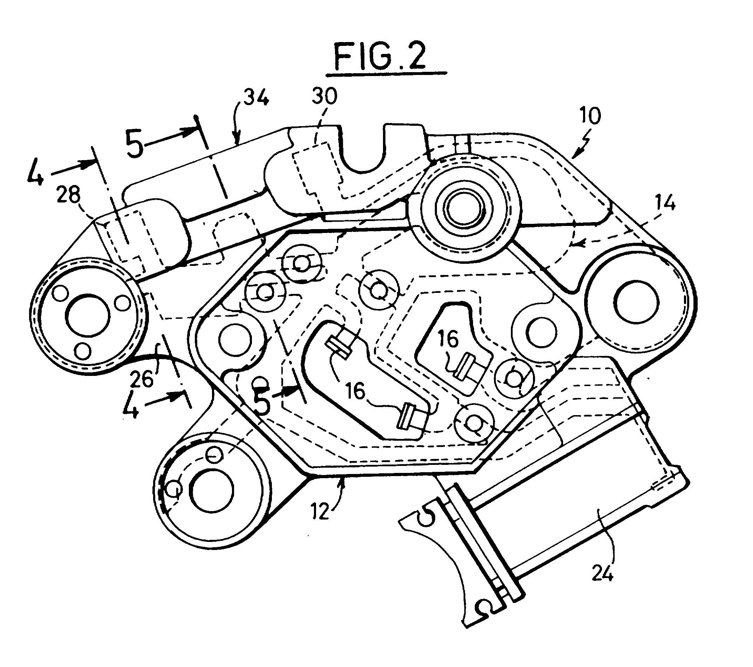

On a représenté sur les figures une plaque porte-balais 10, de conception générale connue, qui est constituée pour l'essentiel par un corps massif 12, en forme générale de plaque, qui est réalisée par une opération unique de surmoulage autour d'un circuit électrique 14, qui est illustré en pointillés à la figure 2.

Selon une conception connue, le circuit électrique 14 est réalisé par des opérations de découpe et de pliage à partir d'un flan de tôle et il n'est pas totalement noyé dans le boîtier isolant 12.

En effet, le circuit électrique découpé 14 comporte notamment des bornes 16 pour son raccordement électrique à un régulateur électronique (non représenté) de l'alternateur (non représenté) équipé de la plaque porte-balais 10.

Le circuit électrique découpé 14 comporte également des pistes 20 et 22, qui ne sont pas recouvertes par la matière plastique isolante du boîtier 12, et qui constituent des bornes pour le raccordement de la plaque porte-balais 10 au circuit d'alimentation (non représenté) de la batterie d'accumulateurs du véhicule automobile, et de raccordement à la masse électrique du véhicule respectivement.

Les balais de la plaque porte-balais 10 sont logés dans un boîtier 24, de forme générale parallélépipédique, qui s'étend transversalement par rapport au plan général de la plaque porte-balais sensiblement au-delà de la face inférieure 26 de la plaque porte-balais 10.

Selon un agencement connu, le circuit électrique découpé 14 comporte aussi deux bornes 28 et 30 pour le raccordement du circuit 14 à un condensateur 32 d'antiparasitage de l'alternateur.

Conformément aux enseignements de l'invention, le condensateur 32 comporte un boîtier 34 réalisé venu de matière par surmoulage avec le corps 12 en matière plastique isolante de la plaque porte-balais 10.

Comme on peut le voir sur les figures, le condensateur 32 est de forme générale parallélépipédique rectangle et il s'étend transversalement par rapport au plan général de la plaque porte-balais 10 pour l'essentiel au-delà de la face supérieure 27 de la plaque porte-balais 10.

Comme on peut le voir sur les différentes figures, le boîtier 34 est constitué par une couche 36 d'épaisseur sensiblement constante qui entoure sur ses six faces rectangulaires le condensateur 32 ainsi que les zones de raccordement électrique (non représentées en détail sur les figures) du condensateur 32 avec les bornes 28 et 30 du circuit électrique découpé 14.

Les bornes 28 et 30 sont par exemple des pattes repliées en partie perpendiculairement au plan du circuit électrique découpé 14 jusqu'à venir en contact avec des zones de raccordement électrique en vis-à-vis du condensateur 32.

Avant l'opération de surmoulage de la plaque 12, et donc de la couche 36 constituant le boîtier 34 du condensateur 32, le raccordement électrique de ce dernier aux bornes 28 et 30 du circuit électrique 14 est par exemple réalisé par soudage ou brasage.

De manière connue, l'une des bornes du condensateur 32 est ainsi reliée électriquement au circuit d'alimentation de la batterie du véhicule, tandis que son autre bord est relié à la masse électrique du véhicule.

En vue de l'opération de surmoulage, et afin de maintenir en position précise le circuit électrique découpé 14, et notamment le condensateur 32, dans le moule (non représenté) sur les figures, ce dernier comporte des doigts de maintien en position du condensateur 32 qui coopèrent avec des portions correspondantes de la surface externe 38 du condensateur.

Dans le mode de réalisation envisagé dans le cadre de l'invention, les doigts de maintien sont constitués par des tiges ou barrettes parallèles, de section rectangulaire, qui s'étendent selon une direction transversale perpendiculaire au plan de la plaque porte-balais 10 au-dessus de la face 26 de cette dernière et qui coopèrent avec les quatre faces latérales du condensateur 32.

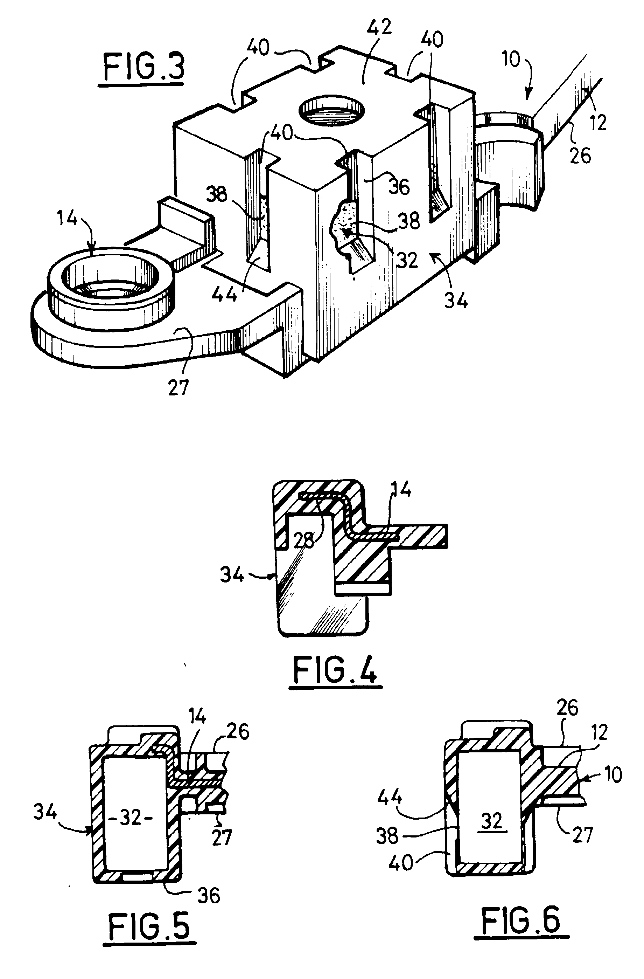

A l'issue de l'opération de surmoulage, les doigts de maintien du condensateur 32 laissent subsister des évidements en forme de rainures 40 qui, en considérant la figure 3, s'étendent verticalement de haut en bas en direction de la face 27 de la plaque porte-balais 10, sans toutefois atteindre cette dernière, les rainures 40 étant débouchantes vers le haut dans la face supérieure 42 du boîtier surmoulé 34 et étant borgnes vers le bas en se terminant par un pan incliné 44.

Selon une caractéristique de l'invention, les doigts de maintien aboutissant à la formation des rainures 40 sont conformés de manière à ce que certains d'entre eux soient parfaitement adjacents à la surface externe 38 du condensateur 32 de manière que, à l'issue de l'opération de surmoulage, les évidements en forme de rainure 40 laissent apparaître, sur au moins une partie de leur longueur, des portions de la surface externe 38 du condensateur 32.

Comme on peut le voir notamment à la figure 3, la surface externe 38 du condensateur 32 est ainsi partiellement apparente à l'extérieur du boîtier 34.

Grâce à cette caractéristique, il est possible de déterminer la valeur de la capacité du condensateur 32, la surface externe 38 étant, de manière connue, d'une couleur correspondant à cette capacité.

La conception selon l'invention permet donc d'assurer, en une seule opération de surmoulage, la réalisation du boîtier 34 du condensateur 32 et la protection complète de ces raccordements électriques.

Cette conception permet donc d'économiser la réalisation d'un boîtier propre au condensateur 32, et donc de gagner notamment le poids de ce boîtier, tout en réduisant la quantité de matière plastique isolante utilisée qui constituait précédemment la paroi périphérique de la cavité qui recevait, selon l'état de la technique, un condensateur de conception classique avec son propre boîtier.

De plus, après surmoulage, il demeure possible de vérifier la présence du condensateur 32 sur la plaque porte-balais et la valeur de la capacité de ce dernier.

## Revendications

1. Alternateur de véhicule automobile du type dans lequel un dispositif de régulation de la tension du courant produit par l'alternateur est agencé sur une partie fixe de l'alternateur et comporte au moins une plaque (10) qui est réalisée par moulage en matière plastique isolante (12) et qui porte un condensateur d'antiparasitage (32), du type dans lequel le condensateur (32) comporte un boîtier de protection et est raccordé à un circuit électrique (14, 28, 30) partiellement noyé par surmoulage dans ladite plaque (10, 12), et du type dans lequel le boîtier de protection (34) du condensateur (32) est réalisé venu de matière avec la plaque (10, 12), par surmoulage autour du condensateur, caractérisé en ce que la dite plaque (10, 12) est une plaque porte-balais, en ce que le boîtier (34) de protection du condensateur (32) est constitué d'une couche (36) d'épaisseur sensiblement constante de la matière plastique isolante (12) qui recouvre la surface externe (38) du condensateur (32), et en ce que cette couche (36) comporte au moins un évidement (40) qui laisse apparaître à l'extérieur du boîtier une partie de la surface externe (38) du condensateur (32) pour qu'il soit possible de déterminer la valeur de la capacité du condensateur (32) dont la surface externe (38) est représentative de cette capacité.

2. Alternateur selon la revendication 1, caractérisé en ce que l'évidement (40) est réalisé venu de matière par moulage.

3. Alternateur selon la revendication 2, caractérisé en ce que l'évidement (40) est la trace d'un doigt de maintien du condensateur (32) en position dans le moule pour la réalisation de l'opération de surmoulage.

4. Alternateur selon l'une quelconque des revendications précédentes, caractérisé en ce que l'évidement (40) est une rainure qui s'étend selon une direction transversale sensiblement perpendiculaire au plan général de la plaque porte-balais (10).

5. Alternateur selon l'une quelconque des revendications précédentes, caractérisé en ce que le condensateur (32) est raccordé aux circuits électriques (14) avant le moulage de la plaque porte-balais (10, 12), et en ce que les zones de raccordements sont noyées dans la masse (12) de la plaque porte-balais (10) afin d'en assurer la protection et l'isolation électrique.

6. Alternateur selon l'une quelconque des revendications précédentes, caractérisé en ce que le condensateur (32) est de forme générale parallélépipédique rectangle et il s'étend transversalement par rapport au plan général de la plaque porte-balais (10).

7. Alternateur selon la revendication 6, caractérisé en ce que le condensateur (32) s'étend transversalement au-delà de l'une des faces (27) de la plaque porte-balais (10).

8. Alternateur selon l'une quelconque des revendications précédentes, caractérisé en ce que le circuit électrique (14) est réalisé par découpage et pliage d'un flan de tôle et il comporte des pattes (28, 30) de raccordement au condensateur (32).

9. Alternateur selon l'une quelconque des revendications précédentes, caractérisé en ce que la plaque porte-balais (10) comporte au moins une borne (20) de raccordement à un circuit d'alimentation d'une batterie du véhicule et une borne (22) de raccordement à la masse électrique du véhicule.

## Patentansprüche

1. Wechselstromgenerator für ein Kraftfahrzeug, bei dem eine Vorrichtung zur Regelung der Spannung des durch den Wechselstromgenerator erzeugten Stroms auf einem ortsfesten Teil des Wechselstromgenerators angeordnet ist und wenigstens eine Platte (10) umfaßt, die als Formteil aus nichtleitendem Kunststoff (12) ausgeführt ist und die einen Entstörkondensator (32) trägt, wobei der Kondensator (32) ein Schutzgehäuse umfaßt und an einen durch Umgießen teilweise in die besagte Platte (10, 12) eingelassenen elektrischen Schaltkreis (14, 28, 30) angeschlossen ist und wobei das Schutzgehäuse (34) des Kondensators (32) einstükkig mit der Platte (10, 12) durch Umgießen um den Kondensator ausgeführt ist, **dadurch gekennzeichnet**, daß die besagte Platte (10, 12) eine Bürstentragplatte ist, daß das Schutzgehäuse (34) des Kondensators (32) aus einer Schicht (36) mit einer in etwa konstanten Dicke des nichtleitenden Kunststoffs (12) besteht, welche die Außenfläche (38) des Kondensators (32) bedeckt, und daß diese Schicht (36) wenigstens eine Aussparung (40) enthält, die einen Teil der Außenfläche (38) des Kondensators (32) außerhalb des Gehäuses hervortreten läßt, damit es möglich ist, den Wert der Kapazität des Kondensators (32) zu bestimmen, dessen Außenfläche (38) für diese Kapazität repräsentativ ist.

2. Wechselstromgenerator nach Anspruch 1, **dadurch gekennzeichnet**, daß die Aussparung (40) einstückig durch Formen ausgeführt ist.

3. Wechselstromgenerator nach Anspruch 2, **dadurch gekennzeichnet**, daß die Aussparung (40) die Spur eines Fingers zum Halten des Kondensators (32) in seiner Position im Formwerkzeug für die Ausführung des Umgießvorgangs ist.

4. Wechselstromgenerator nach einem der vorangehenden Ansprüche, **dadurch gekennzeichnet**, daß die Aussparung (40) eine Nut ist, die sich entlang einer Querrichtung erstreckt, die in etwa senkrecht zur allgemeinen Ebene der Bürstentragplatte (10) verläuft.

5. Wechselstromgenerator nach einem der vorangehenden Ansprüche, **dadurch gekennzeichnet**, daß der Kondensator (32) vor dem Formen der Bürstentragplatte (10, 12) an die elektrischen Schaltkreise (14) angeschlossen ist und daß die Anschlußbereiche in die Masse (12) der Bürstentragplatte (10) eingelassen sind, um den Schutz und die elektrische Isolierung zu gewährleisten.

6. Wechselstromgenerator nach einem der vorangehenden Ansprüche, **dadurch gekennzeichnet**, daß der Kondensator (32) allgemein quaderförmig ausgeführt ist und sich quer im Verhältnis zur allgemeinen Ebene der Bürstentragplatte (10) erstreckt.

7. Wechselstromgenerator nach Anspruch 6, **dadurch gekennzeichnet**, daß sich der Kondensator (32) quer jenseits einer der Flächen (27) der Bürstentragplatte (10) erstreckt.

8. Wechselstromgenerator nach einem der vorangehenden Ansprüche, **dadurch gekennzeichnet**, daß der elektrische Schaltkreis (14) durch Stanzen und Biegen einer Blechscheibe ausgeführt ist und Anschlußansätze (28, 30) zum Anschluß an den Kondensator (32) umfaßt.

9. Wechselstromgenerator nach einem der vorangehenden Ansprüche, **dadurch gekennzeichnet**, daß die Bürstentragplatte (10) wenigstens eine Anschlußklemme (20) für den Anschluß an einen Speisestromkreis einer Batterie des Fahrzeugs und eine Anschlußklemme (22) für den Anschluß an die elektrische Masse des Fahrzeugs umfaßt.

## Claims

1. Motor vehicle alternator of the type in which a device for regulating the voltage of the current produced by the alternator is arranged on a fixed part of the alternator and has at least one plate (10) produced by moulding from insulating plastics material (12) and which carries an interference suppressing capacitor (32), of the type in which the capacitor (32) has a protective casing and is connected to an electrical circuit (14, 28, 30) partially embedded by overmoulding in the said plate (10, 12), and of the type in which the protective casing (34) of the capacitor (32) is produced in one piece with the plate (10, 12), by overmoulding around the capacitor, characterised in that the said plate (10, 12) is a brush-holder plate, in that the protective casing (34) of the capacitor (32) consists of a layer (36) with a substantially constant thickness of the insulating plastics material (12) which covers the external surface (38) of the capacitor (32), and in that this layer (36) has at least one recess (40) which reveals, outside the casing, part of the external surface (38) of the capacitor (32) so that it is possible to determine the value of the capacitance of the capacitor (32) whose external surface (38) represents this capacitance.

2. Alternator according to Claim 1, characterised in that the recess (40) is produced in one piece by moulding.

3. Alternator according to Claim 2, characterised in that the recess (40) is the outline of a finger holding the capacitor (32) in position in the mould for effecting the overmoulding operation.

4. Alternator according to any one of the preceding claims, characterised in that the recess (40) is a groove extending in a transverse direction substantially perpendicular to the overall plane of the brush-holder plate (10).

5. Alternator according to any one of the preceding claims, characterised in that the capacitor (32) is connected to the electrical circuits (14) before the moulding of the brush-holder plate (10, 12), and in that the connecting areas are embedded in the mass (12) of the brush-holder plate (10) in order to ensure its protection and electrical insulation.

6. Alternator according to any one of the preceding claims, characterised in that the capacitor (32) is in the overall shape of a right-angled parallelepiped and extends transversely with respect to the overall plane of the brush-holder plate (10) .

7. Alternator according to Claim 6, characterised in that the capacitor (32) extends transversely beyond one of the faces (27) of the brush-holder plate (10).

8. Alternator according to any one of the preceding claims, characterised in that the electrical circuit (14) is produced by cropping and folding a sheet metal blank and has lugs (28, 30) for connection to the capacitor (32).

9. Alternator according to any one of the preceding claims, characterised in that the brush-holder plate (10) has at least one terminal (20) for connecting to a power supply circuit of a vehicle battery and a terminal (22) for connecting to the electrical earth of the vehicle.
